# EUROPEAN PATENT APPLICATION

(11) **EP 4 664 185 A1**
(43) Date of publication of application: **17.12.2025**
(21) Application number: 24753243.5
(22) Date of filing: 02.02.2024
(51) Int. Cl.: G02B 27/01, B60K 35/23, G02B 5/30, G09F 9/00

(54) **IMAGE PROJECTION DEVICE**

(30) Priority: 09.02.2023 JP 2023018730
(71) Applicant: Koito Manufacturing Co., Ltd., Shinagawa-ku, Tokyo 141-0001 (JP)
(72) Inventor: TOYOSHIMA, Takanobu, Shizuoka-shi, Shizuoka 424-8764 (JP)
(74) Representative: Hoffmann Eitle
(86) International application number: PCT/JP2024/003402
(87) International publication number: WO 2024/166800

(57) **Abstract**

Provided is an image projection device capable of ensuring visibility even when polarized sunglasses or the like are used. Provided is an image projection device (100) for projecting a projection image onto a display unit (WS) for displaying a virtual image, comprising: an image irradiation unit (10) that irradiates image light (L1); and a projection optical unit (20) that projects the image light (L1) as a projection image onto the display unit (WS). The image light (L1) irradiated from the projection optical unit (20) includes p-polarized light with respect to the display unit (WS). The image projection device (100) comprises a polarization adjustment unit (30) that adjusts the polarization direction of the image light (L1).

## Description

### TECHNICAL FIELD

The present invention relates to an image projection device, and more particularly to an image projection device that reflects irradiation light from an image irradiation unit to reach a viewpoint.

### BACKGROUND ART

In the related art, an instrument panel for lighting and displaying an icon is used as a device for displaying various kinds of information in a vehicle. Due to an increase in an amount of information to be displayed, it has been proposed to embed an image display device in the instrument panel or to form the entire instrument panel with the image display device.

Since the instrument panel is located below a front glass (windshield) of the vehicle, for a driver to visually recognize the information displayed on the instrument panel, it is necessary to move the line of sight downward while driving, which is undesirable. Therefore, there has also been proposed a head up display (hereinafter, referred to as HUD) configured to project an image onto the windshield so that the driver can read information when visually recognizing the front of the vehicle (for example, see Patent Literatures 1 and 2).

### CITATION LIST

### PATENT LITERATURE

Patent Literature 1: JP2019-119248A
Patent Literature 2: JP2019-119262A

### SUMMARY OF INVENTION

### TECHNICAL PROBLEM

However, in the image projection device in the related art, reflection of light on the windshield tends to have low reflectance of a P-polarized component and high reflectance of an S-polarized component. Therefore, a polarization direction of irradiation light emitted from an image irradiation unit is set to be S-polarized with respect to the windshield. Accordingly, the irradiation light reaching a position of a viewpoint is only S-polarized light that does not include P-polarized light.

However, when traveling in an environment with strong external light or on a snowy road, an occupant may wear polarized sunglasses and visually recognize the outside from the windshield. At this time, since the light reflected by an object outside the vehicle is also S-polarized light, the polarized sunglasses are set to cut the S-polarized light and transmit the P-polarized light. Therefore, there is a problem that the S-polarized light of the irradiation light reflected by the windshield is cut by the polarized sunglasses and it is difficult for the occupant wearing the polarized sunglasses to visually recognize the image formed by the irradiation light.

Therefore, the present invention has been made in view of the above problems, and an object thereof is to provide an image projection device capable of ensuring visibility even when polarized sunglasses or the like are used.

### SOLUTION TO PROBLEM

In order to solve the above-described problems, an image projection device according to the present invention that projects a projection image onto a display unit for displaying a virtual image, the image projection device including:
an image irradiation unit configured to irradiate image light; and
a projection optical unit configured to project the image light as the projection image onto the display unit,
wherein the image light irradiated from the projection optical unit includes P-polarized light with respect to the display unit, and
wherein the device further includes: a polarization adjustment unit configured to adjust a polarization direction of the image light.

In the image projection device according to the present invention, since the polarization direction of the image light is adjusted by the polarization adjustment unit, distribution of the polarization direction of the image light can be appropriately set according to a curved surface shape of the display unit, and the visibility can be secured even when polarized sunglasses or the like are used.

In an aspect of the present invention, the polarization adjustment unit is a polarization plate that transmits polarized light in a predetermined direction, and the predetermined direction intersects the polarization direction of the image light emitted from the projection optical unit.

In an aspect of the invention, the polarization adjustment unit is a polarization compensation plate whose polarization direction is changed according to an incident angle.

In an aspect of the present invention, the polarization compensation plate is disposed in a curved manner.

In an aspect of the present invention, the polarization adjustment unit is provided between the projection optical unit and the display unit.

In an aspect of the present invention, the polarization adjustment unit adjusts, within a range of 30 degrees, the polarization direction of at least a part of the image light emitted from the projection optical unit.

### ADVANTAGEOUS EFFECTS OF INVENTION

According to the present invention, it is possible to provide an image projection device capable of ensuring visibility even when polarized sunglasses or the like are used.

### BRIEF DESCRIPTION OF DRAWINGS

[FIG. 1] FIG. 1 is a schematic diagram illustrating a configuration of an image projection device 100 according to a first embodiment.
[FIG. 2] FIG. 2 is a graph schematically illustrating an example of reflection characteristics of P-polarized light and S-polarized light in a polarization reflection unit 40.
[FIG. 3] FIG. 3 is a schematic diagram illustrating changes in an incident angle and a polarization direction of image light L1 in a polarization adjustment unit 30.
[FIG. 4] FIG. 4 is a schematic diagram illustrating a configuration of an image projection device 110 according to a second embodiment.
[FIG. 5] FIG. 5 is a schematic diagram illustrating a configuration of an image projection device 120 according to a third embodiment.

### DESCRIPTION OF EMBODIMENTS

### (First Embodiment)

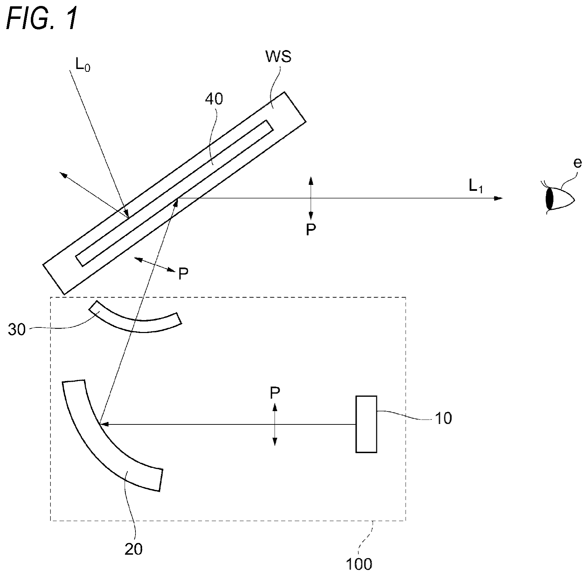

Hereinafter, embodiments of the present invention will be described in detail with reference to the drawings. The same or equivalent components, members, and processes shown in the drawings are denoted by the same reference numerals, and redundant descriptions thereof will be omitted as appropriate. FIG. 1 is a schematic diagram illustrating a configuration of an image projection device 100 according to the present embodiment.

As illustrated in FIG. 1, the image projection device 100 includes an image irradiation unit 10, a free-form surface mirror 20, and a polarization adjustment unit 30. The free-form surface mirror 20 constitutes a projection optical unit in the present invention. In FIG. 1, typical optical paths of image light L1 emitted from the image irradiation unit 10 and external light L0 such as sunlight are schematically indicated by solid arrows. In addition, a windshield WS of a vehicle and a polarization reflection unit 40 are provided outside the image projection device 100, and a driver or the like visually recognizes, via the polarization reflection unit 40, an image by the image light L1 based on a position of a viewpoint e.

The image irradiation unit 10 is a device that emits the irradiation light (image light) L1 including image information by being supplied with a signal including the image information from an information processing unit (not illustrated). The image light L1 emitted from the image irradiation unit 10 is incident on the free-form surface mirror 20. Examples of the image irradiation unit 10 include a liquid crystal display device, an organic EL display device, a micro LED display device, a digital micro-mirror device (DMD), and a projector device using a laser light source. The image light L1 emitted from the image irradiation unit 10 includes light that is P-polarized with respect to the windshield WS as indicated by a double-headed arrow in the drawing. When the image light L1 from the image irradiation unit 10 is polarized light in a specific direction, an orientation of a display surface of the image irradiation unit 10 is set such that a polarization plane of the image light L1 is P-polarized with respect to the windshield WS. Examples of the image irradiation unit 10 that emits the image light L1 of specific polarized light include a liquid crystal display device, a projector device using a laser light source, and a reflective liquid crystal projector device.

The free-form surface mirror 20 is a mirror on which the image light L1 emitted from the image irradiation unit 10 is incident and is reflected toward the windshield WS. A reflection surface shape of the free-form surface mirror 20 is implemented by a free-form surface whose curvature is not constant but changes two-dimensionally. A concave mirror is illustrated as the shape of the free-form surface mirror 20 in FIG. 1, and a convex mirror or a plane mirror may be used. FIG. 1 illustrates an example in which the projection optical unit is implemented by the free-form surface mirror 20, and the image light L1 may be repeatedly reflected by using a plurality of reflecting mirrors and irradiated onto the windshield WS.

The polarization adjustment unit 30 is an optical member that adjusts a polarization direction of the image light L1. A specific configuration of the polarization adjustment unit 30 is not limited, and a polarization compensation plate whose polarization direction is changed according to an incident angle of light can be used. The configuration of the polarization compensation plate is not limited, and a known material and structure can be used. As an example, a WV film manufactured by Fujifilm Corporation or a holographic optical element (HOE) can be used.

In the example illustrated in FIG. 1, a polarization compensation plate is used as the polarization adjustment unit 30, and the polarization compensation plate is disposed in a curved manner. Accordingly, the incident angle of the image light L1 on the polarization compensation plate in an irradiation region has a predetermined distribution, and the polarization direction of the image light L1 also has a predetermined distribution in the irradiation region. FIG. 1 illustrates an example in which the polarization adjustment unit 30 is provided between the free-form surface mirror 20 and the windshield WS. The position where the polarization adjustment unit 30 is provided is not limited, and the polarization adjustment unit 30 may be provided between the free-form surface mirror 20 and the image irradiation unit 10. In order to determine the final distribution of the polarization direction of the image light L1 projected from the image projection device 100, it is preferable to dispose the polarization adjustment unit 30 at the emission position of the image light L1 in the image projection device 100.

The windshield WS is provided in front of a driver seat of the vehicle, and transmits light from the outside of the vehicle in the direction of the viewpoint e. Since the windshield WS transmits at least visible light among light from the outside of the vehicle, even when the external light L0 such as sunlight enters the vehicle from above, a part of the external light L0 reaches the free-form surface mirror 20. The polarization reflection unit 40 is provided inside the windshield WS. In FIG. 1, a sectional shape of the windshield WS is drawn as a flat plate shape for simplification, and in an actual vehicle, the sectional shape is formed of a curved surface having curvatures in the up-down direction and the left-right direction. Further, a region of the windshield WS onto which the image light L1 is projected is a position deviated from the center of the windshield WS in the left-right direction on a driver seat side, and is formed of a left-right asymmetric curved surface.

The polarization reflection unit 40 is an optical member provided inside the windshield WS, and has optical characteristics of low reflectance of an S-polarized component of the incident light and high reflectance of a P-polarized component. In the example illustrated in FIG. 1, the polarization reflection unit 40 is formed in a substantially flat film shape, and is embedded inside the windshield WS. FIG. 1 illustrates an example in which the polarization reflection unit 40 is provided in a part of the windshield WS, and may be provided on the entire surface of the windshield WS.

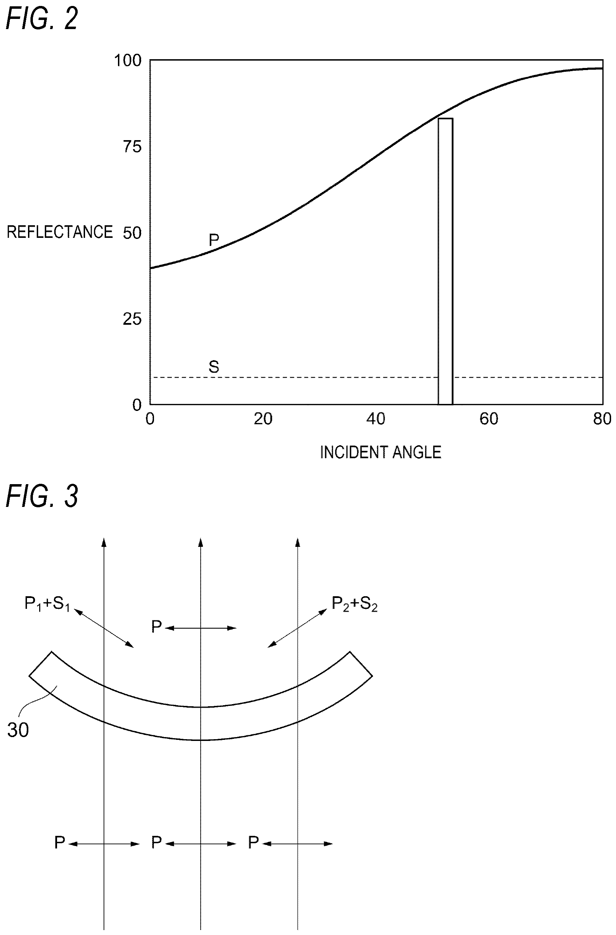

FIG. 2 is a graph schematically illustrating an example of reflection characteristics of P-polarized light and S-polarized light in the polarization reflection unit 40. A horizontal axis of the graph indicates a direction perpendicular to the surface of the polarization reflection unit 40 as 0 degrees and an angle inclined from 0 degrees as the incident angle. A vertical axis of the graph indicates, with a solid line, the reflectance of polarized light (P-polarized light) in an in-plane direction including a 0-degree direction of the polarization reflection unit 40 and an incident direction of light, and with a dashed line, the reflectance of S-polarized light perpendicular to the P-polarized light. As illustrated in FIG. 2, the polarization reflection unit 40 has optical characteristics of high reflectance of the P-polarized light with respect to the windshield WS and low reflectance of the S-polarized light. The reflectance of the P-polarized light is low when the incident angle is small, and the reflectance increases as the incident angle increases. As illustrated in FIG. 2, the polarization reflection unit 40 has high reflectance of 75% or more for the reflectance of the P-polarized light and low reflectance of about 10% for the reflectance of the S-polarized light in the vicinity of a Brewster's angle of the windshield WS. As the polarization reflection unit 40 having the optical characteristics as illustrated in FIG. 2, a polarization reflection film (WCF-PVB) manufactured by 3M Company or those described in Japanese Unexamined Patent Application Publication No. 2006-512622 can be used.

FIG. 1 illustrates an example in which the polarization reflection unit 40 is provided inside the windshield WS as a display unit, and a combiner may be prepared as the display unit separately from the windshield WS, the polarization reflection unit 40 may be provided inside the combiner, and light from the free-form surface mirror 20 may be reflected in a viewpoint direction. In addition, the display unit is not limited to a display unit located in front of the vehicle, and may be disposed lateral to or behind the vehicle as long as the display unit projects an image onto the viewpoint e of the occupant. The viewpoint e is an eye (eye box) of the driver or the occupant of the vehicle, and the image light L1 is incident on the eye box and reaches the retina, so that the driver or the occupant visually recognizes the formed virtual image.

When the image light L1 reflected by the polarization reflection unit 40 reaches the viewpoint (eye box) e of the driver or the like, the virtual image is displayed to be formed in a space. A position where the virtual image is formed is determined by a spread angle of the light emitted from the image irradiation unit 10 when the light travels in the viewpoint direction after being reflected by the free-form surface mirror 20 and the polarization reflection unit 40. At this time, the driver or the occupant recognizes that a virtual image is present at an imaging position farther than the windshield WS. Here, the imaging position of the virtual image mainly depends on a combined focal length of the projection optical unit. Even when the windshield WS is not a flat surface but a curved surface shape, the influence of optical power by the windshield WS is negligible because a radius of curvature of the windshield WS is larger than that of the free-form surface mirror 20.

As illustrated in FIG. 1, the image light L1 from the image irradiation unit 10 includes the P-polarized light with respect to the windshield WS, and the image light L1 reflected by the free-form surface mirror 20 also includes the P-polarized light. In addition, a part of the image light L1 is changed in the polarization direction by the polarization adjustment unit 30, and mainly includes the P-polarized light. Therefore, the image light L1 including the P-polarized light passes through the polarization adjustment unit 30 and reaches the polarization reflection unit 40. Since the polarization reflection unit 40 has high reflectance of the P-polarized light as illustrated in FIG. 2, the P-polarized component of the image light L1 is also favorably reflected and reaches the viewpoint e. Therefore, the virtual image is projected by the P-polarized light, and even when the occupant wears polarized sunglasses, the occupant can visually recognize the virtual image well.

The incident angle of the image light L1 with respect to the windshield WS is preferably set to be the Brewster's angle. At the Brewster's angle, the P-polarized light of the image light L1 is hardly reflected by the surface of the windshield WS and can be taken into the glass constituting the windshield WS. As illustrated in FIG. 2, the polarization reflection unit 40 has high reflectance even at the Brewster's angle at which the incident angle is in the vicinity of 50 degrees, and luminance of the image light L1 reflected by the polarization reflection unit 40 is higher than luminance of the image light L1 slightly reflected by the surface of the windshield WS. Accordingly, it is possible to prevent the P-polarized light of the image light L1 from being reflected by both the surface of the windshield WS and the polarization reflection unit 40, and the virtual image from being visually recognized twice.

As illustrated in FIG. 1, the external light L0 such as sunlight is incident from above the windshield WS. Here, the external light L0 incident from the outside of the vehicle is unpolarized light including components in all polarization directions. The P-polarized component is reflected toward the outside of the vehicle by the polarization reflection unit 40, and only the S-polarized component passes through the windshield WS and reaches the free-form surface mirror 20. Therefore, the P-polarized component of the external light L0 is cut by the polarization reflection unit 40, and the amount of light reaching the image irradiation unit 10 can be suppressed. Accordingly, it is possible to suppress a temperature rise due to the external light L0 reaching the image irradiation unit 10 and to prevent deterioration of the image irradiation unit 10.

As described above, the windshield WS has a curvature in the up-down direction and the left-right direction, and the region irradiated with the image light L1 is a position deviated from the center of the windshield WS. That is, in the surface of the windshield WS and the irradiation region of the image light L1 to the polarization reflection unit 40, the inclination directions are slightly different in the plane. When the image light L1 having the same polarization direction is projected onto such a plane having different inclination directions, the polarized component is separated according to the inclination direction of the incident position to generate the P-polarized component and the S-polarized component. When separation of the polarized component due to the incident position of the image light L1 occurs in this manner, the S-polarized component is reflected by the surface of the windshield WS, the P-polarized component reflected by the polarization reflection unit 40 decreases, so that a double virtual image is formed, and the visibility deteriorates.

Therefore, in the present embodiment, the polarization adjustment unit 30 is disposed in a curved manner to change the distribution of the polarization direction of the image light L1 transmitted through the polarization adjustment unit 30 so that the polarization direction is suitable for the inclination angle of the windshield WS and the polarization reflection unit 40. Here, changing the distribution of the polarization direction of the image light L1 means adjusting, within a range of 30 degrees, the polarization direction of at least a part of the image light L1 emitted from the free-form surface mirror 20. Since the shape of the windshield WS varies depending on the vehicle type and individual differences, the image light L1 having an appropriate polarization distribution according to the vehicle type and individual differences can be projected onto the windshield WS by adjusting the polarization direction by the polarization adjustment unit 30. In addition, by providing the polarization adjustment unit 30 at the emission position of the image light L1 in the image projection device 100, it is possible to perform alignment with respect to the inclination direction of the windshield WS at the end of the assembly process of mounting the image projection device 100 on the vehicle.

FIG. 3 is a schematic diagram illustrating changes in the incident angle and the polarization direction of the image light L1 in the polarization adjustment unit 30. In the present embodiment, a curved polarization compensation plate is used as the polarization adjustment unit 30, as illustrated in FIG. 3. An arrow in the drawing indicates a traveling direction of the image light L1, and a double-headed arrow in the drawing schematically indicates the polarization direction in the image light L1.

As illustrated in FIG. 3, in the polarization adjustment unit 30, since the polarization compensation plate is disposed in a curved manner, the incident angle varies depending on the position of the image light L1. In a region where the image light L1 is vertically incident on the polarization compensation plate, the P-polarized light is maintained even when the image light L1 passes through the polarization compensation plate. Conversion of the polarization direction at other positions based on the P-polarized light will be described. In a region where the light is incident at an inclination angle with respect to a normal direction of the polarization compensation plate, a part of the P-polarized component is converted into the S-polarized component according to the inclination angle, and the polarization direction includes the P-polarized component and the S-polarized component different from the reference P-polarization direction. In FIG. 3, the polarization direction of the P-polarized light is denoted by P₁+S₁ after passing through the polarization compensation plate at the position illustrated on the left side, and the polarization direction is denoted by P₂+S₂ at the position illustrated on the right side.

Therefore, the image light L1 transmitted through the polarization adjustment unit 30 has a distribution in which the polarization direction varies depending on the position in the plane of the irradiated region. The distribution of the polarization direction is determined by the optical characteristics and the curved shape of the polarization compensation plate which is the polarization adjustment unit 30. Therefore, by making the curved shape of the polarization compensation plate correspond to the inclination direction of the windshield WS in the irradiation region of the image light L1, the inclination direction of the windshield WS and the polarization direction of the image light L1 at each position can be appropriately set.

In the example illustrated in FIG. 3, the image light L1 vertically incident on and transmitted through the polarization compensation plate reaches the windshield WS with only the reference P-polarized light, and includes only the P-polarized component with respect to the inclination direction of the windshield WS. At this position, the direction of the reference P-polarized light is polarization in a plane including the incident direction of the image light L1 and the normal direction of the windshield WS.

The image light L1 incident on the polarization compensation plate at a predetermined inclination angle reaches the windshield WS in a polarization direction of P₁+S₁ or P₂+S₂ different from the reference P-polarized light. At this position, the normal direction of the windshield WS has an inclination component in the horizontal direction with respect to the position where the reference P-polarized light is incident, and is a direction in which components of S₁ and S₂ in the polarization direction of P₁+S₁ or P₂+S₂ is canceled. Therefore, at this position, a relation between the normal direction of the windshield WS and the polarization direction of the image light L1 is only the P-polarized component of P₁ or P₂. Accordingly, the reflection of the S-polarized component on the surface of the windshield WS is suppressed, and the P-polarized component is taken into the windshield WS at the Brewster's angle and is favorably reflected by the polarization reflection unit 40.

As described above, in the image projection device 100 according to the present embodiment, since the polarization direction of the image light L1 is adjusted by the polarization adjustment unit 30, the distribution of the polarization direction of the image light L1 can be appropriately set according to the curved surface shape of the windshield WS, and the visibility can be ensured even when polarized sunglasses or the like are used.

### (Second Embodiment)

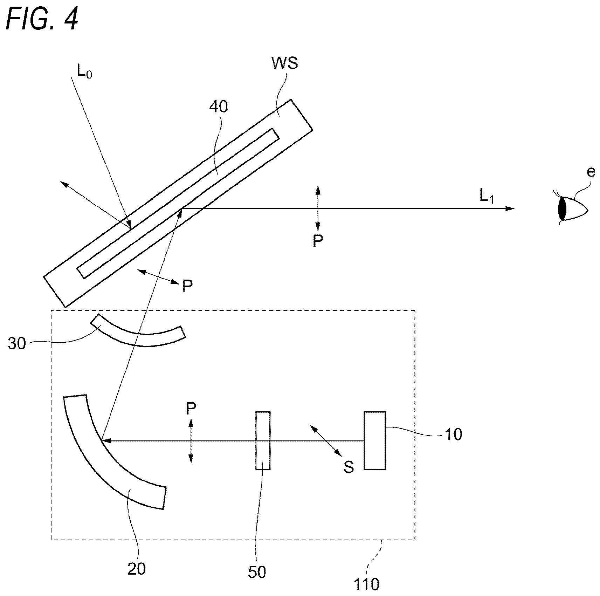

Next, a second embodiment of the present invention will be described with reference to FIG. 4. Description of contents overlapping the first embodiment will be omitted. FIG. 4 is a schematic diagram illustrating a configuration of an image projection device 110 according to the present embodiment. As illustrated in FIG. 4, the image projection device 110 includes the image irradiation unit 10, the free-form surface mirror 20, the polarization adjustment unit 30, and a half-wave plate 50. In the present embodiment, the half-wave plate 50 is disposed between the image irradiation unit 10 and the free-form surface mirror 20.

The half-wave plate 50 is an optical member that is disposed on an optical path of the irradiation light (image light) L1 and generates a phase difference of a half wavelength between a fast axis and a slow axis orthogonal to each other. The fast axis of the half-wave plate 50 is disposed so as to be different from the S-polarized component and the P-polarized component of the image light L1 by 45 degrees.

As illustrated in FIG. 4, in the image projection device 110 according to the present embodiment, the image light L1 from the image irradiation unit 10 is S-polarized with respect to the windshield WS. In the half-wave plate 50, since the fast axis is different from the polarization direction of S-polarized light by 45 degrees, the image light L1 transmitted through the half-wave plate 50 becomes P-polarized light.

The image light L1 converted into the P-polarized light by the half-wave plate 50 is reflected by the free-form surface mirror 20, transmitted through the polarization adjustment unit 30, and projected onto the windshield WS. As described above, the image light L1 transmitted through the polarization adjustment unit 30 is converted to have a distribution of the polarization direction in the irradiation region as illustrated in FIG. 4, and reaches the windshield WS. Therefore, the S-polarized component included in the image light L1 is canceled by the inclination angle in the horizontal direction at each position of the windshield WS.

In the image projection device 110 according to the present embodiment, since the polarization direction of the image light L1 is also adjusted by the polarization adjustment unit 30, the distribution of the polarization direction of the image light L1 can be appropriately set according to the curved surface shape of the windshield WS, and the visibility can be ensured even when polarized sunglasses or the like are used.

### (Third Embodiment)

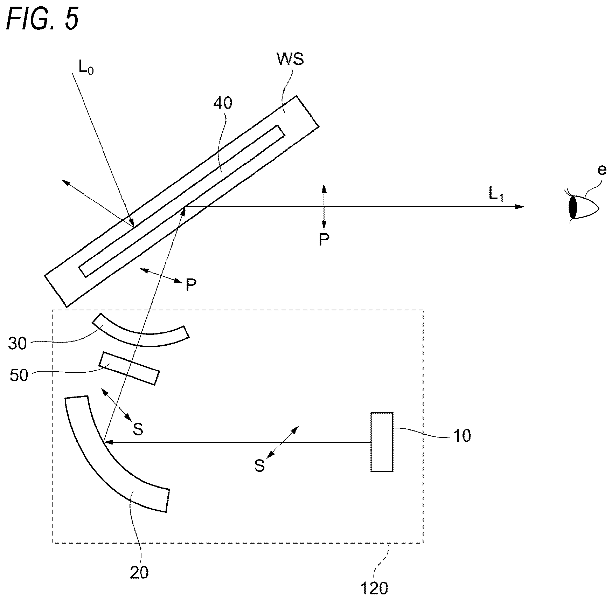

Next, a third embodiment of the present invention will be described with reference to FIG. 5. Description of contents overlapping the first embodiment will be omitted. FIG. 5 is a schematic diagram illustrating a configuration of an image projection device 120 according to the present embodiment. As illustrated in FIG. 5, the image projection device 120 includes the image irradiation unit 10, the free-form surface mirror 20, the polarization adjustment unit 30, and the half-wave plate 50. In the present embodiment, the half-wave plate 50 is disposed between the free-form surface mirror 20 and the polarization adjustment unit 30.

As illustrated in FIG. 5, in the image projection device 120 according to the present embodiment, the image light L1 from the image irradiation unit 10 is S-polarized with respect to the windshield WS. The image light L1 of S-polarized light is reflected by the free-form surface mirror 20 and reaches the half-wave plate 50. In the half-wave plate 50, since the fast axis is different from the polarization direction of S-polarized light by 45 degrees, the image light L1 transmitted through the half-wave plate 50 becomes P-polarized light.

The image light L1 converted into the P-polarized light by the half-wave plate 50 is transmitted through the polarization adjustment unit 30 and projected onto the windshield WS. As described above, the image light L1 transmitted through the polarization adjustment unit 30 is converted to have a distribution of the polarization direction in the irradiation region as illustrated in FIG. 5, and reaches the windshield WS. Therefore, the S-polarized component included in the image light L1 is canceled by the inclination angle in the horizontal direction at each position of the windshield WS.

In the image projection device 120 according to the present embodiment, since the polarization direction of the image light L1 is also adjusted by the polarization adjustment unit 30, the distribution of the polarization direction of the image light L1 can be appropriately set according to the curved surface shape of the windshield WS, and the visibility can be ensured even when polarized sunglasses or the like are used.

### (Fourth Embodiment)

Next, a fourth embodiment of the present invention will be described. Description of contents overlapping the first embodiment will be omitted. In the first embodiment to the third embodiment, an example in which a polarization compensation plate is used as the polarization adjustment unit 30 has been described, and a polarization plate that transmits polarized light in a predetermined direction may be used as the polarization adjustment unit 30.

As an example, it is assumed that the image light L1 is emitted from the image irradiation unit 10 being polarized in a predetermined direction, and the inclination direction of the windshield WS does not match the polarization direction of the image light L1 due to a vehicle type or a manufacturing error. In this case, the image light L1 reaching the windshield WS includes a P-polarized component and an S-polarized component corresponding to the inclination direction. Accordingly, the S-polarized light reflected by the surface of the windshield WS and the P-polarized light reflected by the polarization reflection unit 40 form a double image of a virtual image, which reduces the visibility.

Therefore, the polarization direction in which the polarization plate serving as the polarization adjustment unit 30 transmits is disposed to correspond to the inclination of the windshield WS, so that the S-polarized component in the inclination direction of the windshield WS is cut. Accordingly, the image light L1 reaching the windshield WS is P-polarized with respect to the inclination direction of the windshield WS, and it is possible to suppress double imaging of a virtual image and to improve the visibility.

When an angle difference between the polarization plate and the polarization direction of the image light L1 is larger than 30 degrees, the amount of the image light L1 transmitted through the polarization plate decreases, and the luminance of the virtual image decreases. Therefore, it is preferable that the angle difference between the polarization direction in which the polarization plate as the polarization adjustment unit 30 transmits and the polarization direction of the image light L1 emitted by the image irradiation unit 10 is within 30 degrees.

The present invention is not limited to the embodiments described above, and various modifications can be made within the scope of the claims. Embodiments obtained by appropriately combining technical techniques disclosed in different embodiments are also included in the technical scope of the present invention.

The present international application claims priority based on Japanese Patent Application No. 2023-018730, which is a Japanese patent application filed on Feb. 9, 2023, and all contents of Japanese Patent Application No. 2023-018730, which is the Japanese patent application, are incorporated in the present international application.

The above description of a specific embodiment of the present invention is presented for the purpose of illustration. The above description is not intended to be exhaustive or to limit the present invention to the described aspects as they are. It is apparent to those skilled in the art that many modifications and changes can be made in light of the above description.

### REFERENCE SIGNS LIST

100, 110, 120: image projection device
10: image irradiation unit
20: free-form surface mirror (projection optical unit)
30: polarization adjustment unit
40: polarization reflection unit
50: half-wave plate

## Claims

1. An image projection device that projects a projection image onto a display unit for displaying a virtual image, the image projection device comprising:
an image irradiation unit configured to emit image light; and
a projection optical unit configured to project the image light as the projection image onto the display unit,
wherein the image light emitted from the projection optical unit includes P-polarized light with respect to the display unit, and
wherein the image projection device further includes:
a polarization adjustment unit configured to adjust a polarization direction of the image light.

2. The image projection device according to claim 1, wherein
the polarization adjustment unit is a polarization plate that transmits polarized light in a predetermined direction, and
the predetermined direction intersects the polarization direction of the image light emitted from the projection optical unit.

3. The image projection device according to claim 1, wherein
the polarization adjustment unit is a polarization compensation plate whose polarization direction is changed according to an incident angle.

4. The image projection device according to claim 3, wherein
the polarization compensation plate is disposed in a curved manner.

5. The image projection device according to claim 1, wherein
the polarization adjustment unit is provided between the projection optical unit and the display unit.

6. The image projection device according to any of claims 1 to 5, wherein
the polarization adjustment unit adjusts, within a range of 30 degrees, the polarization direction of at least a part of the image light emitted from the projection optical unit.
